# EUROPEAN PATENT SPECIFICATION

(11) **EP 1 897 908 B1**
(45) Date of publication and mention of the grant of the patent: **07.01.2009**
(21) Application number: 07253055.3
(22) Date of filing: 02.08.2007
(51) Int. Cl.: C08K 5/17, C08K 5/20, C10B 43/08

(54) **Antifoulant dispersant composition and method of use**
Bewuchsverhindernde Dispersionszusammensetzung und Verwendungsverfahren dafür
Composition de dispersant antiencrassement et son procédé d'utilisation

(30) Priority: 03.08.2006 US 835298
(43) Date of publication of application: 12.03.2008
(73) Proprietor: Baker Hughes Incorporated, Houston, TX 77019 (US)
(72) Inventor: Stark, Joseph, Richmond Texas 77469 (US); Metzler, Roger, Sugar Land Texas 77478 (US)
(74) Representative: Beacham, Annabel Rose

(56) References cited:
- US-A- 4 410 419
- US-A1- 2003 049 161
- US-B1- 6 299 836

## Description

### CROSS REFERENCE TO RELATED APPLICATIONS

This application claims priority to the U.S. Provisional Patent Application having serial number 60/835,298; that was filed on August 3, 2006; the contents of which are fully incorporated herein by reference.

### BACKGROUND OF THE INVENTION

### 1. Field of the Invention

The present invention relates to an antifoulant dispersant. The present invention particularly relates to antifoulant dispersants for use with compressors.

### 2. Background of the Art

Fouling of compressors is a well-known problem in processes using them. The fouling of compressors can cause damage to the compressors as well as plant down time, both potentially very expensive problems. There has been considerable effort spent by industry to prevent such fouling. For example, U.S. Patent No. 6,159,547 to McMordie, et al., discloses a method for coating turbomachinery having a metal surface to prevent fouling. The steps of the method are applying to the surface a first slurry containing an acidic aqueous medium containing a galvanically active material and phosphate ions, thereby forming a galvanically sacrificial first layer, curing the first layer, applying to the cured first layer an aqueous non-conductive second slurry containing inorganic phosphate or silicate ions, thereby forming a non-conductive second layer, curing the second layer, applying to the cured second layer a liquid sealer composition containing a thermally stable organic polymer and fluorocarbon, thereby forming a top layer, and curing the top layer.

In some processes, the operating conditions under which the compressors are laboring can foul or even erode compressor blades, no matter how well coated the compressor blades may be. For example, U.S. Patent No. 5,849,983 to Khatib discloses addition of polyisobutylene to a predominantly gaseous stream for preventing the shearing of hydrocarbon droplets in the stream to aerosol sizes. One advantage of this invention is that when the polyisobutylene is sprayed upstream of compressor stations, it functions to prevent fouling and erosion of the compressor blades.

While a polymer can function to prevent fouling, as is disclosed in U.S. Patent No. 5,849,983 to Khatib, in some processes, it is the formation of polymers that can cause fouling. For example, in an ethylene process, it is the formation of organic polymers that can cause compressor fouling.

Steam cracking of hydrocarbons accounts for virtually all of the ethylene produced worldwide. Hydrocarbons used as ethylene feedstocks range from natural gas liquids including ethane, propane and butane, to petroleum liquids including gas oils and naphtha. In the process of producing ethylene, as the ethylene is produced and purified, small amounts of polymers can form. These polymers are generally considered contaminants and are undesirable in the product ethylene. One point of isolation of such contaminants is the compressors. Due to pressure changes, the contaminants can be isolated as liquids and sent to knockout pots wherein the contaminants are held until sent for recycle or disposal.

### Summary of the Invention

In one aspect, the present invention is an antifouling dispersant prepared from a formulation comprising isopropylhydroxyl amine, and an N, N-dialkyl fatty acid amide.

In another aspect, the present invention is a process for preventing fouling of a compressor used to compress gasses comprising depositing an antifouling dispersant onto one or more blades of a compressor to be protected from fouling, the antifouling dispersant being prepared from a formulation comprising isopropylhydroxyl amine and an N, N-dialkyl fatty acid amide.

In still another embodiment, the present invention is a process for preventing fouling of a compressor used to compress gasses comprising using an antifouling dispersant wash in a compressor to be protected from fouling, the antifouling dispersant being prepared from a formulation comprising isopropylhydroxyl amine and an N, N-dialkyl fatty acid amide.

Another embodiment of the invention is a process for preventing fouling of chemical production equipment comprising using an antifouling dispersant wash in at least one device to be protected from fouling, the antifouling dispersant being prepared from a formulation comprising isopropylhydroxyl amine and an N, N-dialkyl fatty acid amide.

### Description of the Preferred Embodiments

In one aspect, the present invention is a process for preventing fouling of compressor blades used to compress gasses. In the practice of the process of the present invention the dispersants can be applied to compressor blades in any way known to those of ordinary skill in the art of applying such materials to be useful for preventing fouling. In one embodiment, the additives are sprayed onto the compressor blades in the form of an aerosol. In another embodiment, the additives are injected into the gas stream being compressed, upstream of the compressor, as an aerosol that is then carried to the compressor blades by the gas being compressed. In still another embodiment, the additives are employed as part of a wash solution applied directly or indirectly to the compressor parts.

In another aspect, the invention is an antifoulant dispersant including isopropylhydroxyl amine (IPHA) and an N, N-dialkylamide of a fatty acid. This combination of components is hereinafter referred to sometimes as dispersant or antifouling dispersant. The antifouling dispersant has the functionality of dispersing polymerized hydrocarbons and inhibiting the auto-polymerization of hydrocarbons thereby reducing polymers forming. The IPHA component of the antifouling dispersants functions to inhibit auto-polymerizations. The N, N-dialkylamide component acts to disperse hydrocarbons and polymers and has a general formula: 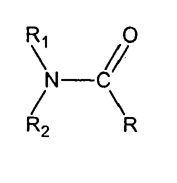 wherein:
R₁ and R₂ are the same or different and are alkyl groups having from one to four carbon atoms; and
R is an alkyl or alkenyl group having from 9 to 30 carbon atoms.

Typically, R is an alkenyl group having one or more unsaturated bonds and having from 12 to 20 carbon atoms. The N, N-dialkylamide may be a single compound but in some embodiments is a mixture of compounds. For example, in one embodiment the N, N-dialkylamide used to prepare the dispersant of the invention is DMAD which is available from Buckman Laboratories of Canada, Ltd., Vaudreuil, Quebec, Canada. The DMAD products are believed to consist primarily of a mixture of two N, N-dialkylamides having the formulae: 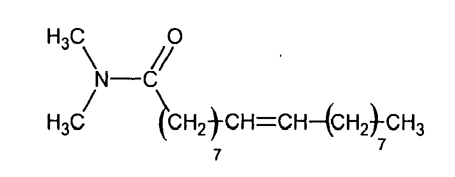 and 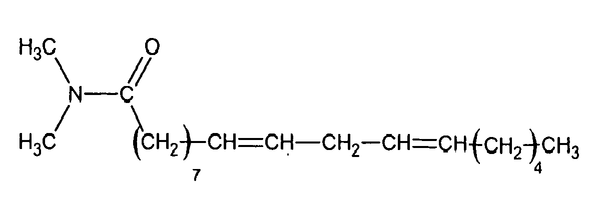 along with a minor amount of similar saturated compounds.

The two components of the dispersants of the present invention may be brought together in ratios of IPHA to N, N-dialkyl fatty acid amides in weight ratios ranging from 10:1 1 to 1:10. In some embodiments this ratio may be from 1:1 to 1:10. In other embodiments, this ratio may be from 1:1 to 1:2. All points intermediate in these ranges is also within the scope of the present invention.

While the dispersants may be used or applied neat, in one embodiment of the invention, the dispersant is prepared using a solvent. The solvents which are useful with the present invention include any solvent in which: a) the IPHA and N, N-dialkylamide of a fatty acid are soluble or can be stably suspended and b) the resulting solution or suspension is miscible with water at a concentration of at least 100 weight ppm of solution or suspension in water. Exemplary solvents include, but are not limited to benzyl alcohol, 2-phenoxyethanol, 2-(methoxymethoxy)ethanol, 2-butoxyethanol, 2-(isopentyloxy)ethanol, 2-(hexyloxy)ethanol, diethylene glycol, diethylene glycol monomethyl ether, diethylene glycol monoethyl ether, diethylene glycol monobutyl ether, triethylene glycol, triethylene glycol monomethyl ether, liquid polyethylene glycol, 1-methoxy-2-propanol, 1-ethoxy-2- propanol, dipropylene glycol, dipropylene glycol monomethyl ether, dipropylene glycol monoethyl ether, and a low molecular weight polypropylene glycol. Commercial solvents such as Butyl CELLOSOLVE^{™}, which consists primarily of 2-butoxyethanol, and Butyl CARBITOL^{™}, which consists primarily of ethylene glycol monobutyl ether may be used and are available from DOW.

When a solvent is present, it may be present in a weight ratio of solvent to dispersant of from about 4:1 to about 1:1.

The components of the dispersants may be brought together in any way that is known to be useful to those of ordinary skill in preparing chemical compositions for industrial use. For example, the components may be admixed sequentially or all at once. The dispersants of the invention may be prepared using a batch process or they may be prepared using a continuous process.

The dispersants of the present invention have a useful synergy, the mixed components performing better together than the individual components singularly.

While the dispersants of the present invention are effective at preventing compressor fouling, there is a second property of these dispersants that is also desirable. The dispersants of the invention have the desirable property of not creating emulsions with resultant foaming in, for example, knockout pots. Knockout pots are used most applications where a compressor is employed and is often a point where dispersants may accumulate. While the dispersant of the invention may not act to break existing emulsions, they do not of themselves cause emulsions, unlike many other dispersants used for preventing compressor fouling.

While the dispersants of the present invention are useful in compressors used for an ethylene process production process, they are also useful in other similar applications and with other equipment. For example, the dispersants of the invention may be used with any process where process equipment will come into contact with ethylene cracked gassed. Another application of the invention is ethylene and acrylonitrile quench water systems. The dispersants of the application may be used with ethylene dilution steam generators and acrylonitrile purification systems. Many polymer processes have monomer recovery systems which are subject to fouling and are good target applications for the dispersants of the invention. Process water strippers and waste water strippers used with petrochemical processes such as styrene, butadiene, acrylonitrile, and ethylene processes are potential applications for the dispersants of the invention. Finally, ethylene acid gas scrubbers and butadiene solvent recovery systems are also end use applications of the dispersants of the present invention. The dispersants can be desirably used in any process which has process equipment subject to fouling with polymers. The dispersants are especially desirable in applications where foaming would problematic. In addition to processes that consume or produce at least one of styrene, butadiene, acrylonitrile, and ethylene are potential applications of the dispersants.

For the purposes of the present application, the term process equipment means compressors, fans, impellers, pumps, vacuum pumps, valves, heat exchangers; sensors, and the like, that are associated with the process and which may be subject to fouling. This term also includes supersets of these components where more than one of the components is part of a "system" such as, for example, a stripper where hydrocarbons are removed from an aqueous process stream, or a knockout pot.

### EXAMPLES

The following examples are provided to illustrate the present invention. The examples are not intended to limit the scope of the present invention and they should not be so interpreted. Amounts are in weight parts or weight percentages unless otherwise indicated.

### EXAMPLE 1

A dispersant of the present invention is prepared by admixing 7.5 parts IPHA, 10 parts DMAD (a fatty acid dimethylamide available from Buckman Laboratories of Canada), 40 parts Butyl CARBITOL, and 42.5 parts water.

The dispersant is tested according to ASTM-873 also known as the induced gums test. This test method determines the tendency of a hydrocarbon to form gums under accelerated aging conditions. In this method 100 ml of a hydrocarbon is placed into a bomb and air is introduced to attain a pressure of about 100 psi (689 kPa). The bomb is then kept at 100°C for four hours. After the completion of the test, bomb is cooled rapidly and the pressure is released slowly. The liquid phase of the sample is evaporated 160°C under a nitrogen purge for 30 minutes then at about 220°C under a steam purge for 30 minutes. The value of potential gum is determined using weight differentials. The dispersant is tested at a concentration of 100 ppm. A control is prepared and tested wherein no dispersant is included in the hydrocarbon.

The results are shown below in Table 1

### EXAMPLE 2

Example 1 is repeated substantially identically except that the dispersant is prepared by admixing 6 parts IPHA, 20 parts DMAD, 40 parts Butyl CARBITOL, and 34 parts water.

**Table 1**

| Sample ID | Gums Produced (mg/100ml) | Percent Reduction |
|---|---|---|
| Control* | 355.6 | -- |
| Example 1 (Dispersant I) | 328.4 | 7.6 |
| Example 2 (Dispersant II) | 327.4 | 7.9 |

| | | |
|---|---|---|
| * Not an example of the invention. | | |

### EXAMPLE 3

The dispersant prepared in Example 1 (Dispersant I) is tested according to the following procedure.

100 ml of a hydrocarbon is placed into a bomb and nitrogen is introduced to attain a pressure of about 100 psi (689 kPa). The bomb is then kept at 100°C for four hours. After the completion of the test, bomb is cooled rapidly and the pressure is released slowly. The liquid phase of the sample is evaporated 160°C under a nitrogen purge for 30 minutes then at about 220°C under a steam purge for 30 minutes. The value of potential gum is determined using weight differentials. The dispersant is tested at a concentration of 12 ppm. A control is prepared and tested wherein no dispersant is included in the hydrocarbon.

The results are shown below in Table 2.

### EXAMPLE 4

Example 3 is repeated substantially identically except that the dispersant is tested at 25 ppm.

The results are shown below in Table 2.

### COMPARATIVE EXAMPLE A

Example 3 is repeated substantially identically except that diethylhydroxyl amine (DEHA) is used (Dispersant III) instead of IPHA.

The results are shown below in Table 2.

### COMPARATIVE EXAMPLE B

Example 3 is repeated substantially identically except that Dispersant III is used at a concentration of 25ppm.

The results are shown below in Table 2.

### COMPARATIVE EXAMPLE C

Example 3 is repeated substantially identically except that the dispersant is IPHA alone and it is used at a concentration of 1.875 ppm.

The results are shown below in Table 2.

### COMPARATIVE EXAMPLE D

Example 3 is repeated substantially identically except that the dispersant is DMAD alone and it is used at a concentration of 2.5 ppm.

The results are shown below in Table 2.

**Table 2**

| Sample ID | Concentration (ppm) | Percent Reduction of Gums |
|---|---|---|
| Example 3 (Dispersant I) | 12 | 53 |
| Example 4 (Dispersant I) | 25 | 38 |
| Comparative Example A* (Dispersant III) | 12 | -8^ |
| Comparative Example B* (Dispersant III) | 25 | -36^ |
| Comparative Example C* IPHA alone | 1.875^{#} | -70^ |
| Comparative Example D* DMAD alone | 2.5^{##} | -35^ |

| | | |
|---|---|---|
| * Not an example of the invention. ^A negative reduction indicates that the gum concentration increased over the blank. ^{#}Represents the level of IPHA found in Example 4. ^{##}Represents the level of DMAD found in Example 4. | | |

## Claims

1. An antifouling dispersant comprising:
isopropylhydroxyl amine, and
an N, N-dialkyl fatty acid amide.

2. The antifouling dispersant of Claim 1 wherein the N, N-dialkyl fatty acid amide has a general formula: 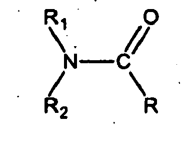 wherein:
R₁ and R₂ are the same or different and are alkyl groups having from one to four carbon atoms; and
R is an alkyl or alkenyl group having from 9 to 30 carbon atoms.

3. The antifouling dispersant of Claim 2 wherein R is an alkyl or alkenyl group having from 12 to 20 carbon atoms.

4. The antifouling dispersant of any of Claims 1 to 3 wherein the N, N-dialkyl fatty acid amide is a single compound.

5. The antifouling dispersant of any of Claims 1 to 3. wherein the N, N-dialkyl fatty acid amide is a mixture of compounds.

6. The antifouling dispersant of Claim 5 wherein the N, N-dialkyl fatty acid amide comprises a mixture of compounds having the formulae: 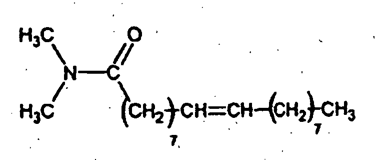 and

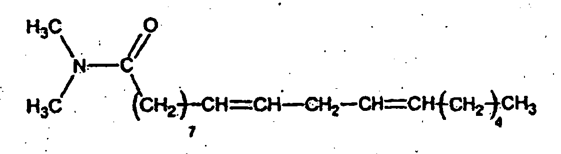

7. The antifouling dispersant of any preceding Claim wherein the weight ratio of isopropylhydroxyl amine to N,-N-dialkyl fatty acid amide is from 10:1 to 1:10.

8. The antifouling dispersant of Claim 7 wherein the weight ratio of isopropylhydroxyl amine to N, N-dialkyl fatty acid amide is from 1:1 to 1:2.

9. The antifouling dispersant of any preceding Claim wherein the antifouling dispersant is dissolved in a solvent.

10. The antifouling dispersant of Claim 9 wherein the solvent is selected from the group consisting of: benzyl alcohol, 2-phenoxyethanol, 2-(methoxymethoxy)ethanol, 2-butoxyethanol, 2-(isopentyloxy)ethanol, 2-(hexyloxy)ethanol, diethylene glycol, diethylene glycol monomethyl ether, diethylene glycol monoethyl ether, diethylene glycol monobutyl ether, triethylene glycol, triethylene glycol monomethyl ether, liquid polyethylene glycol, 1-methoxy-2-propanol, 1-ethoxy-2-propanol, dipropylene glycol, dipropylene glycol monomethyl ether, dipropylene glycol monoethyl ether, low molecular weight polypropylene glycol, and mixtures thereof.

11. The antifouling dispersant of Claim 9 or Claim 10 wherein the solvent is present in a weight ratio of solvent to antifouling dispersant of from 4:1 to 1:1.

12. A process for preventing fouling of a compressor used to compress gasses comprising depositing an antifouling dispersant onto one or more blades of a compressor to be protected from fouling, the antifouling dispersant being prepared from a formulation as defined in any one of claims 1 to 11.

13. The process of Claim 12 wherein the antifoulant dispersant is sprayed onto the compressor blades in the form of an aerosol.

14. The process of Claim 12 wherein the antifoulant dispersant is injected into a gas stream being compressed, upstream of the compressor, as an aerosol that is then carried to the compressor blades by the gas being compressed.

15. A process for preventing fouling of a compressor used to compress gasses comprising employing an antifouling dispersant wash in a compressor to be protected from fouling, the antifouling dispersant being prepared from a formulation as defined in any of one claims 1 to 11.

16. A process for preventing fouling of chemical production equipment comprising employing an antifouling dispersant wash in at least one device to be protected from fouling, the antifouling dispersant being prepared from a formulation as defined in any one of claims 1 to 11.

17. The process of Claim 16 wherein the chemical production equipment is selected from the group consisting of: equipment used for ethylene cracked gas; equipment used for ethylene quench water; equipment used for acrylonitrile quench water; equipment used for ethylene dilution steam generation; equipment used for acrylonitrile purification; equipment used for monomer recovery; process water strippers; waste water strippers; ethylene acid gas scrubbers; equipment used for butadiene solvent recovery; and a monomer recovery system.

18. The process of Claim 16 wherein the chemical production equipment is part of a petrochemical production process selected from the group consisting of styrene, butadiene, acrylonitrile, and ethylene production processes.

19. The process of Claim 16 wherein the chemical production equipment is part of a petrochemical production process which consumes a chemical selected from the group consisting of styrene, butadiene, acrylonitrile, and ethylene.

## Patentansprüche

1. Bewuchsverhindernde Dispersionszusammensetzung, enthaltend Isopropylhydroxylamin und ein N,N-Dialkylfettsäureamid.

2. Bewuchsverhindernde Dispersionszusammensetzung nach Anspruch 1, wobei das N,N-Dialkylfettsäureamid die allgemeine Formel: 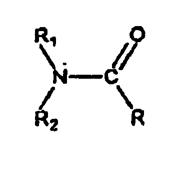 hat, worin
R¹ und R² dieselbe oder unterschiedliche Bedeutungen haben und Alkylgruppen mit 1 bis 4 C-Atomen darstellen, und
R eine Alkyl- oder Alkenylgruppe mit 9 - 30 C-Atomen ist.

3. Bewuchsverhindernde Dispersionszusammensetzung nach Anspruch 2, wobei R eine Alkyl- oder Alkenylgruppe mit 12 - 20 C-Atomen ist.

4. Bewuchsverhindernde Dispersionszusammensetzung nach einem der Ansprüche 1 bis 3, wobei das N,N-Dialkylfettsäureamid eine Einzelverbindung ist.

5. Bewuchsverhindernde Dispersionszusammensetzung nach einem der Ansprüche 1 bis 3, wobei das N,N-Dialkylfettsäureamid ein Verbindungsgemisch ist.

6. Bewuchsverhindernde Dispersionszusammensetzung nach Anspruch 5, wobei das N,N-Dialkylfettsäureamid ein Gemisch der Verbindungen der Formeln 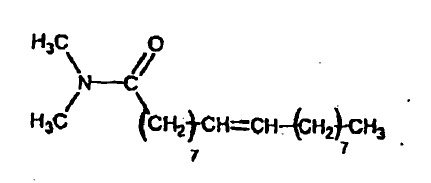 und 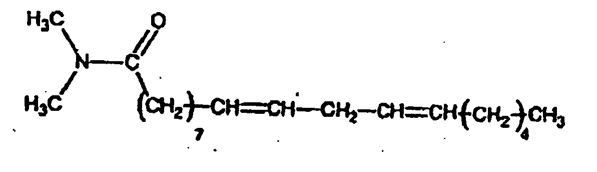 umfaßt.

7. Bewuchsverhindernde Dispersionszusammensetzung nach einem der vorhergehenden Ansprüche, wobei das Gewichtsverhältnis des Isopropylhydroxylamins zum N,N-Dialkylfettsäureamid 10 : 1 bis 1 : 10 beträgt.

8. Bewuchsverhindernde Dispersionszusammensetzung nach Anspruch 8, wobei das Gewichtsverhältnis des Isopropylhydroxylamins zum N,N-Dialkylfettsäureamid 1 : 1 bis 1 : 2 beträgt.

9. Bewuchsverhindernde Dispersionszusammensetzung nach einem der vorhergehenden Ansprüche, wobei die bewuchsverhindernde Dispersionszusammensetzung in einem Lösungsmittel gelöst ist.

10. Bewuchsverhindernde Dispersionszusammensetzung nach Anspruch 9, worin das Lösungsmittel ausgewählt ist aus der Gruppe Benzylalkohol, 2-Phenoxyethanol, 2-(Methoxymethoxy)ethanol, 2-Butoxyethanol, 2-(Isopentyloxy)ethanol, 2-(Hexyloxy)ethanol, Diethylenglycol, Diethylenglycolmonomethylether, Diethylenglycolmonethylether, Diethylenglycolmonobutylether, Triethylenglycol, Triethylenglycolmonomethylether, flüssigem Polyethylenglycol, 1-Methoxy-2-propanol, 1-Ethoxy-2-propanol, Dipropylenglycol, Dipropylenglycolmonomethylether, Dipropylenglycolmonethylether, Polypropylenglycol von niederem Molekulargewicht und Gemischen davon.

11. Bewuchsverhindernde Dispersionszusammensetzung nach Anspruch 9 oder 10, worin das Lösungsmittel in einem Gewichtsverhältnis von Lösungsmittel zu bewuchsverhindernde Dispersionszusammensetzung von 4 : 1 bis 1 : 1 vorliegt.

12. Verfahren zur Verhinderung des Bewuchses eines Kompressors zur Verdichtung von Gasen, welches die Abscheidung einer bewuchsverhindernden Dispersionszusammensetzung auf einem oder mehreren Flügeln eines vor Bewuchs zu schützenden Kompressors, wobei die bewuchsverhindernde Dispersionszusammensetzung aus einer in einem der Ansprüche 1 bis 11 definierten Formulierung hergestellt wird.

13. Verfahren nach Anspruch 12, worin die bewuchsverhindernde Dispersionszusammensetzung auf die Kompressorflügel in Form eines Aerosols aufgesprüht wird.

14. Verfahren nach Anspruch 12, worin die bewuchsverhindernde Dispersionszusammensetzung in einen zu verdichtenden Gasstrom oberhalb des Kompressors als Aerosol eingespritzt wird, das dann den Kompressorflügeln durch das zu verdichtende Gas zugeführt wird.

15. Verfahren zur Verhinderung des Bewuchses eines zur Verdichtung von Gasen verwendeten Kompressors, das eine Wäsche mit der bewuchsverhindernden Dispersionszusammensetzung in einem vor Bewuchs zu schützenden Kompressor umfaßt, wobei die bewuchsverhindernde Dispersionszusammensetzung aus einer in einem der Ansprüche 1 bis 11 definierten Formulierung hergestellt wird.

16. Verfahren zur Verhinderung des Bewuchses einer chemischen Produktionsanlage unter Einsatz einer Wäsche mit einer bewuchsverhindernden Dispersionszusammensetzung in wenigstens einer vor Bewuchs zu schützenden Vorrichtung, wobei die bewuchsverhindernde Dispersionszusammensetzung aus einer in einem der Ansprüche 1 bis 11 definierten Formulierung hergestellt wird.

17. Verfahren nach Anspruch 16, worin die chemische Produktionsanlage ausgewählt wird aus der Gruppe, bestehend aus einer Anlage für Ethylenkrackgas, einer Anlage für das Wasser für die Abschreckung des Ethylens, einer Anlage für das Wasser für die Abschreckung von Acrylnitril, einer Anlage für die Verdünnungsdampferzeugung zur Erhöhung der Ethylenausbeute, einer Anlage für die Reinigung von Acrylnitril, einer Anlage für die Monomerrückgewinnung, aus Prozesswasserstrippern, Abwasserstrippem, Ethylensäuregasskrubbern, einer Anlage für die Rückgewinnung von Butadienlösungsmittel und einem Monomerrückgewinnungssystem.

18. Verfahren nach Anspruch 16, worin die chemische Produktionsanlage Teil ist eines petrochemischen Produktionsprozesses, ausgewählt aus Verfahren zur Produktion von Styrol, Butadien, Acrylnitril und Ethylen.

19. Verfahren nach Anspruch 16, worin die chemische Produktionsanlage Teil eines petrochemischen Produktionsprozesses ist, bei dem ein chemischer Stoff verbraucht wird, ausgewählt unter Styrol, Butadien, Acrylnitril und Ethylen.

## Revendications

1. Dispersant antiencrassement, comprenant :
de l'isopropylhydroxylamine, et
un amide de N,N-dialkyle acide gras.

2. Dispersant antiencrassement suivant la revendication 1, dans lequel l'amide de N,N-dialkyle acide gras répond à la formule générale : 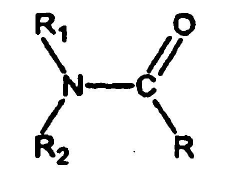 dans laquelle :
R₁ et R₂ sont identiques ou différents et représentent des groupes alkyle ayant un à quatre atomes de carbone ; et
R représente un groupe alkyle ou alcényle ayant 9 à 30 atomes de carbone.

3. Dispersant antiencrassement suivant la revendication 2, dans lequel R représente un groupe alkyle ou alcényle ayant 12 à 20 atomes de carbone.

4. Dispersant antiencrassement suivant l'une quelconque des revendications 1 à 3, dans lequel l'amide de N,N-dialkyle acide gras est un composé unique.

5. Dispersant antiencrassement suivant l'une quelconque des revendications 1 à 3, dans lequel l'amide de N,N-dialkyle acide gras est un mélange de composés.

6. Dispersant antiencrassement suivant la revendication 5, dans lequel l'amide de N,N-dialkyle acide gras comprend un mélange de composés répondant aux formules :

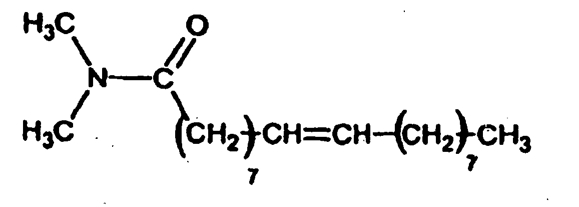

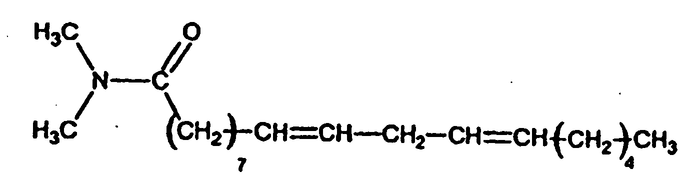

7. Dispersant antiencrassement suivant l'une quelconque des revendications précédentes, dans lequel le rapport pondéral de l'isopropylhydroxylamine à l'amide de N,N-dialkyle acide gras est de 10:1 à 1:10.

8. Dispersant antiencrassement suivant la revendication 8, dans lequel le rapport pondéral de l'isopropylhydroxylamine à l'amide de N,N-dialkyle acide gras est de 1:1 à 1:2.

9. Dispersant antiencrassement suivant l'une quelconque des revendications précédentes, ledit dispersant antiencrassement étant dissous dans un solvant.

10. Dispersant antiencrassement suivant la revendication 9, dans lequel le solvant est choisi dans le groupe consistant en : l'alcool benzylique, le 2-phénoxy-éthanol, le 2-(méthoxyméthoxy)éthanol, le 2-butoxyéthanol, le 2-(isopentyloxy)éthanol, le 2-(hexyloxy)éthanol, le diéthylèneglycol, l'éther monométhylique de diéthylèneglycol, l'éther monoéthylique de diéthylèneglycol, l'éther monobutylique de diéthylèneglycol, le triéthylèneglycol, l'éther monométhylique de triéthylèneglycol, le polyéthylèneglycol liquide, le 1-méthoxy-2-propanol, le 1-éthoxy-2 - propanol, le dipropylèneglycol, l'éther monométhylique de dipropylèneglycol, l'éther monoéthylique de dipropylèneglycol, un polypropylènéglycol de bas poids moléculaire, et leurs mélanges.

11. Dispersant antiencrassement suivant la revendication 9 ou la revendication 10, dans lequel le solvant est présent en un rapport pondéral du solvant au dispersant antiencrassement de 4:1 à 1:1.

12. Procédé pour empêcher l'encrassement d'un compresseur utilisé pour comprimer des gaz, comprenant le dépôt d'un dispersant antiencrassement sur une ou plusieurs pales d'un compresseur à protéger contre l'encrassement, le dispersant antiencrassement étant préparé à partir d'une formulation telle que définie dans l'une quelconque des revendications 1 à 11.

13. Procédé suivant la revendication 12, dans lequel le dispersant antiencrassement est pulvérisé sous forme d'un aérosol sur les pales du compresseur.

14. Procédé suivant la revendication 12, dans lequel le dispersant antiencrassement est injecté dans un courant gazeux qui est comprimé, en amont du compresseur, sous forme d'un aérosol qui est ensuite entraîné jusqu'aux pales du compresseur par le gaz qui est comprimé.

15. Procédé pour empêcher l'encrassement d'un compresseur utilisé pour comprimer des gaz, comprenant l'utilisation d'un lavage avec un dispersant antiencrassement dans un compresseur destiné à être protégé contre l'encrassement, le dispersant antiencrassement étant préparé à partir d'une formulation telle que définie dans l'une quelconque des revendications 1 à 11.

16. Procédé pour empêcher l'encrassement d'un dispositif de production chimique, comprenant l'utilisation d'un lavage avec un dispersant antiencrassement dans au moins un dispositif destiné à être protégé contre l'encrassement, le dispersant antiencrassement étant préparé à partir d'une formulation telle que définie dans l'une quelconque des revendications 1 à 11.

17. Procédé suivant la revendication 16, dans lequel le dispositif de production chimique est choisi dans le groupe consistant en : un dispositif utilisé pour le gaz de craquage de production d'éthylène ; un dispositif utilisé pour l'eau de refroidissement de production d'éthylène ; un dispositif utilisé pour l'eau de refroidissement de production d'acrylonitrile ; un dispositif utilisé pour la production d'un courant de dilution de production d'éthylène ; un dispositif utilisé pour la purification de l'acrylonitrile ; un dispositif utilisé pour la récupération de monomères ; des épurateurs d'eau de traitement ; des épurateurs d'eau résiduaire ; des épurateurs de gaz acides de production d'éthylène ; un dispositif utilisé pour la récupération du solvant de production de butadiène ; et un système de récupération de monomères.

18. Procédé suivant la revendication 16, dans lequel le dispositif de production chimique fait partie d'un procédé de production pétrochimique choisi dans le groupe consistant en des procédés de production de styrène, de butadiène, d'acrylonitrile et d'éthylène.

19. Procédé suivant la revendication 16, dans lequel le dispositif de production chimique fait partie d'un procédé de production pétrochimique qui consomme un agent chimique choisi dans le groupe consistant en le styrène, le butadiène, l'acrylonitrile et l'éthylène.
